# EUROPEAN PATENT SPECIFICATION

(11) **EP 2 134 177 B1**
(45) Date of publication and mention of the grant of the patent: **05.03.2014**
(21) Application number: 08734958.5
(22) Date of filing: 02.04.2008
(51) Int. Cl.: A01N 43/40, A01N 25/30, A01N 43/42, A01N 43/80, A01N 47/10, A01N 47/36, A01N 47/30, A01P 13/00

(54) **METHOD FOR THE CONTROL OF WEEDS IN TURF**
VERFAHREN ZUR BEKÄMPFUNG VON UNKRAUT IN RASENSTÜCKEN
PROCEDE DE LUTTE CONTRE LES MAUVAISES HERBES SUR DU GAZON

(30) Priority: 05.04.2007 US 910317 P
(43) Date of publication of application: 23.12.2009
(73) Proprietor: Syngenta Participations AG, 4058 Basel (CH)
(72) Inventor: COUILLARD, Andrée-Anne, CH-4058 Basel (CH); JAMES, John, R., Greensboro, NC 27409 (US); MANLEY, Brian, CH-4058 Basel (CH); ROSS, David, Charles, Greensboro, NC 27409 (US)
(74) Representative: Lee, Michael David
(86) International application number: PCT/EP2008/002612
(87) International publication number: WO 2008/122395

(56) References cited:
- EP-A- 1 388 285
- WO-A-2005/053407
- WO-A-2007/011847
- WO-A-2008/014185

## Description

The present invention relates to a method for controlling weeds in turf using a herbicidally effective amount of a cyclohexandione herbicide.

High quality, healthy turf is essential, for example, for lawns, golf courses, sports areas and adjacent to roads. Weeds can decrease the quality of turf due to the contrast in colour and texture between the turfgrass plants and the weeds. In addition, weeds compete with the turfgrass plants for available water and nutrients, usually resulting in thinning of desirable turfgrass cover. Accordingly, there exists a need for novel methods to enhance turfgrass quality to provide high quality, healthy turf.

The compound 4-Hydroxy-3-[2-(2-methoxyethoxymethyl)-6-trifluoromethylpyridine-3-carbonyl]-bicyclo[3.2.1]oct-3-en-2-one is known to be an effective herbicide against weeds in crops selected from cereals, cotton, soya, sugar beet, sugar cane, plantation crops, rapeseed, maize and rice. The compound and the preparation thereof is known, for example, from WO 01/94339, EP1388285 relates to herbicidal compositions comprising this compound in combination with at least one further herbicide.

Surprisingly, it has now been found that the compound 4-Hydroxy-3-[2-(2-methoxyethoxymethyl)-6-trifluoromethylpyridine-3-carbonyl]-bicyclo[3.2.1]oct-3-en-2-one is very effective for combatting weeds in turfgrass and for improving the quality of turfgrass.

According to the present invention, there is provided a method for controlling weeds in turfgrass, which comprises applying to the turfgrass, the locus thereof or seeds thereof a herbicidally effective amount of a compound of formula I 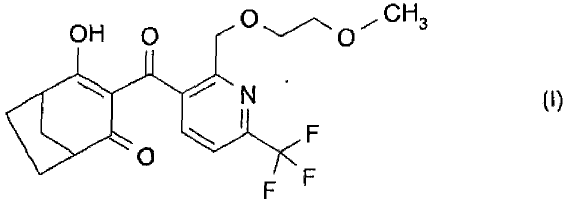 or a composition which contains said compound.

The method according to the present invention is especially suitable to improve the quality of turfgrass. Therefore another aspect of the present invention is a method to improve the quality of turfgrass, which comprises applying to the turfgrass, the locus thereof or seeds thereof a compound of formula I 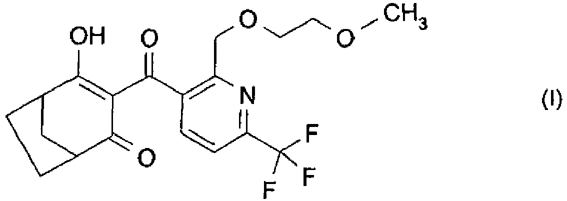 or a composition which contains an amount of the compound of formula I effective to increase turfgrass quality.

The term "control" or "controlling" means kill, reduce or retard growth or prevent or reduce germination. Generally the plants to be controlled are unwanted plants (weeds).

As used herein the phrase "quality" of turfgrass is meant to include visual quality of turfgrass and functional quality of turfgrass.

"Visual quality" of turfgrass relates to the visual appearance, such as density (the number of aerial shoots per unit area), uniformity (for example uniformity of texture, e.g. width of the leaf blades, which can be fine-textured as for example in red fescue or coarse-textured as for example in tall fescue), colour or smoothness (which affects for example the playability of a golf course).

"Functional quality" of turfgrass relates to, for example, rigidity (resistance of the turfgrass leaves to compression and is related to the wear resistance of a turf), elasticity (tendency of the turfgrass leaves to spring back once a compressing force is removed), resiliency (capacity of a turf to absorb a shock without altering its surface characteristics), ball roll (average distance a ball travels upon being released to a turf surface), yield (measure of clippings removed with mowing), verdure (measure of amount of aerial shoots remaining after mowing), rooting (amount of root growth evident at any one time during the growing season), and recuperative capacity (capacity of turfgrasses to recover from damage caused by disease organisms, insects, traffic and the like).

An improvement in the quality of turfgrass can relate to one or more of the visual or functional quality characteristics described above or to any combination of these quality characteristics.

The term "improvement" as used herein, refers to a measurable or noticeable increase in a given turfgrass quality characteristic when compared to the same turfgrass quality characteristic produced under the same conditions, but without the application of the subject method.

An improvement in the quality characteristics of turfgrass is, for example, a greener or more pleasant, leaf colour of the turf.

The invention also includes the salts that the compound of formula I is able to form with amines, alkali metal and alkaline earth metal bases or quaternary ammonium bases. Among the alkali metal and alkaline earth metal hydroxides as salt formers, special mention should be made of the hydroxides of lithium, sodium, potassium, magnesium and calcium, but especially the hydroxides of sodium and potassium.

Examples of amines suitable for ammonium salt formation include ammonia as well as primary, secondary and tertiary C₁-C₁₈alkylamines, C₁-C₄hydroxyalkylamines and C₂-C₄alkoxyalkylamines, for example methylamine, ethylamine, n-propylamine, isopropylamine, n-, iso-, sec-, and tert- butylamine, n-amylamine, isoamylamine, hexylamine, heptylamine, octylamine, nonylamine, decylamine, pentadecylamine, hexadecylamine, heptadecylamine, octadecylamine, methylethylamine, methylisopropylamine, methylhexylamine, methylnonylamine, methylpentadecylamine, methyloctadecylamine, ethylbutylamine, ethylheptylamine, ethyloctylamine, hexylheptylamine, hexyloctylamine, dimethylamine, diethylamine, di-n-propylamine, diisopropylamine, di-n-butylamine, di-n-amylamine, diisoamylamine, dihexylamine, diheptylamine, dioctylamine, ethanolamine, n-propanolamine, isopropanolamine, N,N-diethanolamine, N-ethylpropanolamine, N-butylethanolamine, allylamine, n-butenyl-2-amine, n-pentenyl-2-amine, 2,3-dimethylbutenyl-2-amine, dibutenyl-2-amine, n-hexenyl-2-amine, propylenediamine, trimethylamine, triethylamine, tri-n-propylamine, triisopropylamine, tri-n-butylamine, triisobutylamine, tri-sec-butylamine, tri-n-amylamine, methoxyethylamine and ethoxyethylamine; heterocyclic amines, for example pyridine, quinoline, isoquinoline, morpholine, piperidine, pyrrolidine, indoline, quinuclidine and azepine; primary arylamines, for example anilines, methoxyanilines, ethoxyanilines, o-, m- and p-toluidines, phenylenediamines, benzidines, naphthylamines and o-, m- and p-chloroanilines; but especially triethylamine, isopropylamine and diisopropylamine.

According to the invention, by "turfgrass" there is understood an annual or perennial Gramineae. Said gramineae preferably belongs to one or more of the genera Agropyron, Agrostis, Axonopus, Bromus, Buchloë, Cynodon, Eremochloa, Festuca, Lolium, Paspulum, Pennisetum, Phleum, Poa, Stenotaphrum or Zoysia. More preferably, said gramineae belongs to one or more of the genera Agrostis, Buchloë, Cynodon, Eremochloa, Festuca, Lolium, Paspulum, Pennisetum, Poa, Stenotaphrum or Zoysia.

According to the invention by "turf" is understood as a group of turfgrass, which covers a surface area of ground and is subject to regular maintenance.

The present invention can be practiced with all turfgrasses, including cool season turfgrass and warm season turfgrass.

Cool season turfgrasses include, for example: Bluegrasses (*Poa* L.), such as Kentucky Bluegrass *(Poa pratensis* L.), Rough Bluegrass (*Poa trivialis* L.), Canada Bluegrass (*Poa compressa* L.) and Annual Bluegrass (*Poa annua* L.); Bentgrasses *(Agrostis L.),* such as Creeping Bentgrass *(Agrostis palustris* Huds.), Colonial Bentgrass (*Agrostis tenius* Sibth.), Velvet Bentgrass (*Agrostis canina* L.) and Redtop (*Agrostis alba L.);* Fescues (*Festuca* L.), such as Creeping Red Fescue (*Festuca rubra* L.), Chewings Fescue (*Festuca rubra* var. commutata Gaud.), Sheep Fescue (*Festuca ovina* L.), Hard Fescue (*Festuca longifolia*), Tall Fescue (*Festuca arundinacea* Schreb.), Meadow Fescue (*Festuca elatior* L.); Ryegrasses (*Lolium* L.), such as Perennial Ryegrass (*Lolium perenne* L.), Annual (Italian) Ryegrass (*Lolium multiflorum* Lam.); Wheatgrasses (*Agropyron* Gaertn.), such as Fairway Wheatgrass (*Agropyron cristatum* (L.) Gaertn.), Western Wheatgrass (*Agropyron smithii* Rydb.); Smooth Brome (*Bromus inermis* Leyss.); and Timothy (*Phleum L.).*

Examples of warm season turfgrasses are Bermudagrasses (*Cynodon* L. C. Rich), Zoysiagrasses (*Zoysia* spp.), St. Augustinegrass (*Stenotaphrum secundatum* (Walt.) Kuntze), Centipedegrass (*Eremochloa ophiuroides* (Munro.) Hack.), Carpetgrass (*Axonopus* Beauv.), Bahiagrass (*Paspalum notatum* Flugge.), Kikuyugrass (*Pennisetum clandestinum* Hochst. ex Chiov.), Buffalograss (*Buchloe dactyloides* (Nutt.) Engelm.), Centipedegrass (*Eremochloa* spp.) and Seashore paspalum (*Paspalum vaginatum* swartz).

The present invention may be used to control any weeds that are present in turfgrass, including for example, monocotyledonous weeds such as *Agrostis* spp., *Digitaria* spp., *Avena* spp., *Setaria* spp., *Lolium* spp., *Echinochloa* spp., *Scirpus* spp., *Monochoria* spp., *Sagittaria* spp., *Bromus* spp., *Alopecurus* spp., *Sorghum* spp., *Rottboellia* spp., *Cyperus* spp. and dicotyledonous weeds such as *Stellaria* spp., *Nasturtium* spp., *Sinapis* spp., *Solanum* spp., *Phaseolus* spp., *Taraxacum* spp., *Trifolium* spp., *Abutilon* spp., *Sida* spp., *Xanthium* spp., *Amaranthus* spp., *Chenopodium* spp., *Ipomoea* spp., *Chrysanthemum* spp., *Galium* spp., *Viola* spp. and *Veronica* spp..

In particular, the present invention may be used to contol weeds that are commonly present in turfgrass, including grasses such as large and smooth crabgrass (*Digitaria* spp.), bent grass (*Agrostis* spp.) and nimblewill (*Muhlenbergia* spp.)), and broadleaf weeds such as dandelion (*Taraxacum* spp.), white and red clover (*Trifolium* spp.), chickweed (*Cerastium* spp.), henbit (*Lamium* spp.), corn speedwell (*Veronica* spp.), wood sorrel (*Oxalis* spp.), buckhorn and broadleaf plantain (*Plantago spp*.), dollar weed (*Hydrocotyle* spp.), FL pusley (*Richardia* spp.), lambsquarters (*Chenopodium* spp.), knotweed (*Fallopia* spp.), ragweed (*Ambrosia* spp.), wild violets (*Viola* spp.), pigweed (*Amaranthus* spp.) and hedge weed (*Erysimum* spp.).

For the purposes of the present invention, the term 'weeds' includes undesirable crop species such as volunteer crops. For example, in the context of turf grass crops such as on a golf course, creeping bentgrass putting green turf can be considered a 'volunteer' if found in a fairway section where a different variety of grass is being cultivated.

The term "locus" of turfgrass as used herein is intended to embrace the place on which the turfgrass is growing, the place where the seeds of the turfgrass are sown or the place where the seeds of the turfgrass will be placed for subsequent plant growth.

According to the invention, the "locus" of a turf can relate to soil or to a substrate. An example for such a locus is a golf course, on which turfgrass is managed.

According to the invention the term "soil" means natural soil, which is typically present on a land area, such as soil being present on a golf course, or means soil that has been modified, such as soil being granulated and/or treated with agrochemicals, such as fertilizers. An example of granulated and/or treated soil is disclosed in US-5,265,372.

According to the invention the term "substrate" means a medium for the growth of turfgrass and the like, suited for application to a variety of existing ground structures. Typically, such media are soil-free mixtures that include sufficient proportions of ingredients of elastomeric granules, suitable binding emulsion, mineral aggregate, filler and controlled release plant nutrient particles, so that when laid and cured, the mixture produces a water permeable, resilent substrate having air pockets through which a root system of turfgrass can penetrate. Turfgrass growing on said substrate can form a turf, which can be applied to non-porous surfaces, such as for example roofs of buildings, terraces and other hard surface areas, or to porous surfaces, such as for example football fields or golf courses. Examples of such substrates are described in WO 2005/002323. Elastomeric granules can be, for example, granules of rubber, granules of recycled vehicle tyre rubber or mixtures thereof.

The compounds of formula I according to the invention can be used as herbicides in unmodified form, as obtained in the synthesis, but they are generally formulated into herbicidal compositions in a variety of ways using formulation adjuvants and auxiliaries, such as carriers, solvents and surface-active substances. The formulations can be in various physical forms, for example in the form of dusting powders, gels, wettable powders, water-dispersible granules, water-dispersible tablets, effervescent compressed tablets, emulsifiable concentrates, microemulsifiable concentrates, oil-in-water emulsions, oil flowables, aqueous dispersions, oily dispersions, suspoemulsions, capsule suspensions, emulsifiable granules, soluble liquids, water-soluble concentrates (with water or a water-miscible organic solvent as carrier), or impregnated polymer films. Such formulations can either be used directly or are diluted prior to use. Diluted formulations can be prepared, for example, with water, liquid fertilizers, micronutrients, biological organisms, oil or solvents.

The formulations can be prepared, for example, by mixing the active ingredient with formulation adjuvants in order to obtain compositions in the form of finely divided solids, granules, solutions, dispersions or emulsions. The active ingredients can also be formulated with other adjuvants, for example finely divided solids, mineral oils, vegetable oils, modified vegetable oils, organic solvents, water, surface-active substances or combinations thereof. The active ingredients can also be contained in very fine microcapsules consisting of a polymer. Microcapsules contain the active ingredients in a porous carrier. This enables the active ingredients to be released into their surroundings in controlled amounts (e.g. slow release). Microcapsules usually have a diameter of from 0.1 to 500 microns. They contain active ingredients in an amount of about from 25 to 95 % by weight of the capsule weight. The active ingredients can be present in the form of a monolithic solid, in the form of fine particles in solid or liquid dispersion or in the form of a suitable solution. The encapsulating membranes comprise, for example, natural and synthetic gums, cellulose, styrene-butadiene copolymers, polyacrylonitrile, polyacrylate, polyester, polyamides, polyureas, polyurethane or chemically modified polymers and starch xanthates or other polymers that are known to the person skilled in the art in this connection. Alternatively it is possible for very fine microcapsules to be formed wherein the active ingredient is present in the form of finely divided particles in a solid matrix of a base substance, but in that case the microcapsule is not encapsulated.

Granules may be formed either by granulating a mixture of a compound of formula I and one or more powdered solid diluents or carriers, or from pre-formed blank granules by absorbing a compound of formula I (or a solution thereof, in a suitable agent) in a porous granular material (such as pumice, attapulgite clays, fuller's earth, kieselguhr, diatomaceous earths or ground corn cobs) or by adsorbing a compound of formula I (or a solution thereof, in a suitable agent) on to a hard core material (such as sands, silicates, mineral carbonates, sulphates or phosphates) and drying if necessary. Agents which are commonly used to aid absorption or adsorption include solvents (such as aliphatic and aromatic petroleum solvents, alcohols, ethers, ketones and esters) and sticking agents (such as polyvinyl acetates, polyvinyl alcohols, dextrins, sugars and vegetable oils). One or more other additives may also be included in granules (for example an emulsifying agent, wetting agent or dispersing agent).

Formulation adjuvants suitable for the preparation of the compositions according to the invention are known *per se*. As liquid carriers there may be used: water, toluene, xylene, petroleum ether, vegetable oils, acetone, methyl ethyl ketone, cyclohexanone, acid anhydrides, acetonitrile, acetophenone, amyl acetate, 2-butanone, butylenes carbonate, chlorobenzene, cyclohexane, cyclohexanol, alkyl esters of acetic acid, diacetone alcohol, 1,2-dichloropropane, diethanolamine, p-diethylbenzene, diethylene glycol, diethylene glycol abietate, diethylene glycol butyl ether, diethylene glycol ethyl ether, diethylene glycol methyl ether, N,N-dimethylformamide, dimethyl sulfoxide, 1,4-dioxane, dipropylene glycol, dipropylene glycol methyl ether, dipropylene glycol dibenzoate, diproxitol, alkylpyrrolidone, ethyl acetate, 2-ethyl hexanol, ethylene carbonate, 1,1,1-trichloroethane, 2-heptanone, alpha-pinene, d-limonene, ethyl lactate, ethylene glycol, ethylene glycol butyl ether, ethylene glycol methyl ether, gamma-butyrolactone, glycerol, glycerol acetate, glycerol diacetate, glycerol triacetate, hexadecane, hexylene glycol, isoamyl acetate, isobornyl acetate, isooctane, isophorone, isopropylbenzene, isopropyl myristate, lactic acid, laurylamine, mesityl oxide, methoxypropanol, methyl isoamyl ketone, methyl isobutyl ketone, methyl laurate, methyl octanoate, methyl oleate, methylene chloride, m-xylene, n-hexane, n-octylamine, octadecanoic acid, octylamine acetate, oleic acid, oleylamine, o-xylene, phenol, polyethylene glycol (PEG 400), propionic acid, propyl lactate, propylene carbonate,propylene glycol, propylene glycol methyl ether, p-xylene, toluene, triethyl phosphate, triethylene glycol, xylenesulfonic acid, paraffin, mineral oil, trichloroethylene, perchloroethylene, ethyl acetate, amyl acetate, butyl acetate, propylene glycol methyl ether, diethylene glycol methyl ether, methanol, ethanol, isopropanol, and higher molecular weight alcohols, such as amyl alcohol, tetrahydrofurfuryl alcohol, hexanol, octanol, ethylene glycol, propylene glycol, glycerol, N-methyl-2-pyrrolidone and the like. Water is generally the carrier of choice for the dilution of the concentrates. Suitable solid carriers are, for example, talc, titanium dioxide, pyrophyllite clay, silica, attapulgite clay, kieselguhr, limestone, calcium carbonate, bentonite, calcium montomorillonite, cottonseed husks, wheatmeal, soybean flour, pumice, wood flour, ground walnut shells, lignin and similar materials.

A large number of surface-active substances can advantageously be used both in solid and in liquid formulations, especially in those formulations which can be diluted with a carrier prior to use. Surface-active substances may be anionic, cationic, non-ionic or polymeric and they may be used as emulsifiying, wetting or suspending agents or for other purposes. Typical surface-active substances include, for example, salts of alkyl sulfates, such as diethanolammonium lauryl sulfate; salts of alkylarylsulfonates, such as calcium dodecylbenzenesulfonate; alkylphenol-alkylene oxide addition products, such as nonylphenol ethoxylate; alcohol-alkylene oxide addition products, such as tridecyl alcohol ethoxylate; soaps, such as sodium stearate; salts of alkylnaphthalenesulfonates, such as sodium dibutylnaphthalenesulfonate; dialkyl esters of sulfosuccinate salts, such as sodium di(2-ethylhexyl)sulfosuccinate; sorbitol esters, such as sorbitol oleate; quaternary amines, such as lauryl trimethylammonium chloride, polyethylene glycol esters of fatty acids, such as polyethylene glycol stearate; block copolymers of ethylene oxide and propylene oxide; and salts of mono- and di-alkyl phosphate esters.

Further adjuvants which can usually be used in pesticidal formulations include crystallisation inhibitors, viscosity-modifying substances, suspending agents, dyes, antioxidants, foaming agents, light absorbers, mixing aids, anti-foams, complexing agents, neutralising or pH-modifying substances and buffers, corrosion-inhibitors, fragrances, wetting agents, absorption improvers, micronutrients, plasticisers, glidants, lubricants, dispersants, thickeners, anti-freezes, microbiocides, and also liquid and solid fertilizers.

The formulations may also comprise additional active substances, for example further herbicides, herbicide safeners, plant growth regulators, fungicides or insecticides.

The compositions according to the invention can additionally include an additive comprising an oil of vegetable or animal origin, a mineral oil, alkyl esters of such oils or mixtures of such oils and oil derivatives. The amount of oil additive used in the composition according to the invention is generally from 0.01 to 10 %, based on the spray mixture. For example, the oil additive can be added to the spray tank in the desired concentration after the spray mixture has been prepared. Preferred oil additives comprise mineral oils or an oil of vegetable origin, for example rapeseed oil, olive oil or sunflower oil, emulsified vegetable oil, such as AMIGO® (Rhône-Poulenc Canada Inc.), alkyl esters of oils of vegetable origin, for example the methyl derivatives, or an oil of animal origin, such as fish oil or beef tallow. A preferred additive contains, for example, as active components essentially 80 % by weight alkyl esters of fish oils and 15 % by weight methylated rapeseed oil, and also 5 % by weight of customary emulsifiers and pH modifiers. Especially preferred oil additives comprise alkyl esters of C₈-C₂₂ fatty acids, especially the methyl derivatives of C₁₂-C₁₈ fatty acids, for example the methyl esters of lauric acid, palmitic acid and oleic acid, being important. Those esters are known as methyl laurate (CAS-111-82-0), methyl palmitate (CAS-112-39-0) and methyl oleate (CAS-112-62-9). A preferred fatty acid methyl ester derivative is Emery® 2230 and 2231 (Cognis GmbH).

The application and action of the oil additives can be further improved by combining them with surface-active substances, such as non-ionic, anionic or cationic surfactants. Examples of suitable anionic, non-ionic and cationic surfactants are listed on pages 7 and 8 of WO 97/34485. Preferred surface-active substances are anionic surfactants of the dodecylbenzylsulfonate type, especially the calcium salts thereof, and also non-ionic surfactants of the fatty alcohol ethoxylate type. Special preference is given to ethoxylated C₁₂₋C₂₂ fatty alcohols having a degree of ethoxylation of from 5 to 40. Examples of commercially available surfactants are the Genapol types (Clariant AG). Also preferred are silicone surfactants, especially polyalkyl-oxide-modified heptamethyltrisiloxanes, which are commercially available e.g. as Silwet L-77®, and also perfluorinated surfactants. The concentration of surface-active substances in relation to the total additive is generally from 1 to 30 % by weight. Examples of oil additives that consist of mixtures of oils or mineral oils or derivatives thereof with surfactants are Edenor ME SU®, Turbocharge® (Syngenta AG, CH) and Actipron® (BP Oil UK Limited, GB).

The said surface-active substances may also be used in the formulations alone, that is to say without oil additives.

Furthermore, the addition of an organic solvent to the oil additive/surfactant mixture can contribute to a further enhancement of action. Suitable solvents are, for example, Solvesso® (ESSO) and Aromatic Solvent® (Exxon Corporation). The concentration of such solvents can be from 10 to 80 % by weight of the total weight. Such oil additives, which may be in admixture with solvents, are described, for example, in US-A-4 834 908. A commercially available oil additive disclosed therein is known by the name MERGE® (BASF Corporation). A further oil additive that is preferred according to the invention is SCORE® (Syngenta Crop Protection Canada.)

In addition to the oil additives listed above, in order to enhance the activity of the compositions according to the invention it is also possible for formulations of alkylpyrrolidones, (e.g. Agrimax®) to be added. Formulations of synthetic latices, such as, for example, polyacrylamide, polyvinyl compounds or poly-1-p-menthene (e.g. Bond®, Courier® or Emerald®) can also be used. Solutions that contain propionic acid, for example Eurogkem Pen-e-trate®, can also be mixed into the spray mixture as activity-enhancing agents.

The herbicidal formulations generally contain from 0.1 to 99 % by weight, especially from 0.1 to 95 % by weight, of a compound of formula I and from 1 to 99.9 % by weight of a formulation adjuvant, which preferably includes from 0 to 25 % by weight of a surface-active substance. Whereas commercial products will preferably be formulated as concentrates, the end user will normally employ dilute formulations.

The rate of application of the compounds of formula I may vary within wide limits and depends upon the nature of the soil, the method of application (pre- or post-emergence; seed dressing; application to the seed furrow; no tillage application etc. impregnation on or in fertilizers (granular or liquid)), the weed to be controlled, the prevailing climatic conditions, and other factors governed by the method of application and the time of application. The compounds of formula I according to the invention are generally applied at a rate of 0.001 to 4 kg/ha, especially from 0.005 to 1 kg/ha, in particular of 0.01 to 0.5 kg/ha.

Preferred formulations have especially the following compositions:
(% = percent by weight):

### Emulsifiable concentrates:

| | |
|---|---|
| Active ingredient: | 1 to 95 %, preferably 60 to 90 % |
| Surface-active agent: | 1 to 30 %, preferably 5 to 20 % |
| Liquid carrier: | 1 to 80 %, preferably 1 to 35 % |

### Dusts:

| | |
|---|---|
| Active ingredient: | 0.1 to 10 %, preferably 0.1 to 5 % |
| Solid carrier: | 99.9 to 90 %, preferably 99.9 to 99 % |

### Suspension concentrates:

| | |
|---|---|
| Active ingredient: | 5 to 75 %, preferably 10 to 50 % |
| Water: | 94 to 24 %, preferably 88 to 30 % |
| Surface-active agent: | 1 to 40 %, preferably 2 to 30 % |

### Wettable powders:

| | |
|---|---|
| Active ingredient: | 0.5 to 90 %, preferably 1 to 80 % |
| Surface-active agent: | 0.5 to 20 %, preferably 1 to 15 % |
| Solid carrier: | 5 to 95 %, preferably 15 to 90 % |

### Granules:

| | |
|---|---|
| Active ingredient: | 0.1 to 30 %, preferably 0.1 to 15 % |
| Solid carrier: | 99.5 to 70 %, preferably 97 to 85 % |

The following Examples further illustrate, but do not limit, the invention.

| F1. Emulsifiable concentrates | a) | b) | c) | d) |
|---|---|---|---|---|
| Active ingredient | 5 % | 10 % | 25 % | 50 % |
| Calcium dodecylbenzene-sulfonate | 6 % | 8 % | 6 % | 8 % |
| Castor oil polyglycol ether (36 mol EO) | 4 % | - | 4 % | 4 % |
| Octylphenol polyglycol ether (7-8 mol EO) | - | 4 % | - | 2 % |
| NMP | - | - | 10 % | 20 % |
| Aromatic hydrocarbon mixture C₉-C₁₂ | 85 % | 78 % | 55 % | 16 % |

Emulsions of any desired concentration can be prepared from such concentrates by dilution with water.

| F2. Solutions | a) | b) | c) | d) |
|---|---|---|---|---|
| Active ingredient | 5 % | 10 % | 50 % | 90 % |
| 1-methoxy-3-(3-methoxy-propoxy)-propane | - | 20 % | 20 % | - |
| Polyethylene glycol MW 400 | 20 % | 10 % | - | - |
| NMP | - | - | 30 % | 10 % |
| Aromatic hydrocarbon mixture C₉-C₁₂ | 75 % | 60 % | - | - |

The solutions are suitable for application in the form of microdrops.

| F3. Wettable powders | a) | b) | c) | d) |
|---|---|---|---|---|
| Active ingredient | 5 % | 25 % | 50 % | 80 % |
| Sodium lignosulfonate | 4 % | - | 3 % | - |
| Sodium lauryl sulfate | 2 % | 3 % | - | 4 % |
| Sodium diisobutylnaphthalene- sulfonate | - | 6 % | 5 % | 6 % |
| Octylphenol polyglycol ether (7-8 mol EO) | - | 1 % | 2 % | - |
| Highly dispersed silicic acid | 1 % | 3 % | 5 % | 10 % |
| Kaolin | 88 % | 62 % | 35 % | - |

The active ingredient is thoroughly mixed with the adjuvants and the mixture is thoroughly ground in a suitable mill, yielding wettable powders which can be diluted with water to give suspensions of any desired concentration.

| F4. Coated granules | a) | b) | c) |
|---|---|---|---|
| Active ingredient | 0.1 % | 5 % | 15 % |
| Highly disperse silicic acid | 0.9 % | 2 % | 2 % |
| Inorganic carrier (diameter 0.1 - 1mm) e.g. CaCO₃/SiO₂ | 99.0 % | 93 % | 83 % |

The active ingredient is dissolved in methylene chloride, the solution is sprayed onto the carrier and the solvent is subsequently evaporated off *in vacuo.*

| F5. Coated granules | a) | b) | c) |
|---|---|---|---|
| Active ingredient | 0.1 % | 5 % | 15 % |
| Polyethylene glycol MW 200 | 1.0 % | 2 % | 3 % |
| Highly disperse silicic acid | 0.9 % | 1 % | 2 % |
| Inorganic carrier (diameter 0.1 -1 mm) e.g. CaCO₃/SiO₂ | 98.0 % | 92 % | 80 % |

The finely ground active ingredient is applied uniformly, in a mixer, to the carrier moistened with polyethylene glycol. Non-dusty coated granules are obtained in this manner.

| F6. Extruded granules | a) | b) | c) | d) |
|---|---|---|---|---|
| Active ingredient | 0.1 % | 3 % | 5 % | 15 % |
| Sodium lignosulfonate | 1.5 % | 2 % | 3 % | 4 % |
| Carboxymethylcellulose | 1.4 % | 2 % | 2 % | 2 % |
| Kaolin | 97.0 % | 93 % | 90 % | 79 % |

The active ingredient of formula I and optionally an additional fertilizer is mixed and ground with the adjuvants and the mixture is moistened with water. The resulting mixture is extruded and then dried in a stream of air.

| F7. Dusts | a) | b) | c) |
|---|---|---|---|
| Active ingredient | 0.1 % | 1 % | 5 % |
| Talcum | 39.9 % | 49 % | 35 % |
| Kaolin | 60.0 % | 50 % | 60 % |

Ready-to-use dusts are obtained by mixing the active ingredient with the carriers and grinding the mixture in a suitable mill.

| F8. Suspension concentrates | a) | b) | c) | d) |
|---|---|---|---|---|
| Active ingredient | 3 % | 10 % | 25 % | 50 % |
| Ethylene glycol | 5 % | 5 % | 5 % | 5 % |
| Nonylphenol polyglycol ether (15 mol EO) | - | 1 % | 2 % | - |
| Sodium lignosulfonate | 3 % | 3 % | 4 % | 5 % |
| Carboxymethylcellulose | 1 % | 1 % | 1 % | 1 % |
| 37 % aqueous formaldehyde solution | 0.2 % | 0.2 % | 0.2 % | 0.2 % |
| Silicone oil emulsion | 0.8 % | 0.8 % | 0.8 % | 0.8 % |
| Water | 87 % | 79 % | 62 % | 38 % |

The finely ground active ingredient is thoroughly mixed with the adjuvants, yielding a suspension concentrate from which suspensions of any desired concentration can be prepared by dilution with water.

### F9. Flowable concentrate for seed treatment

| | |
|---|---|
| Active ingredient | 40 % |
| Propylene glycol | 5 % |
| Copolymer butanol PO/EO | 2 % |
| Tristyrenephenole with 10-20 moles EO | 2 % |
| 1,2-benzisothiazolin-3-one (in the form of a 20% solution in water) | 0.5 % |
| Monoazo-pigment calcium salt | 5 % |
| Silicone oil (in the form of a 75 % emulsion in water) | 0.2 % |
| Water | 45.3 % |

The finely ground active ingredient is thoroughly mixed with the adjuvants, giving a suspension concentrate from which suspensions of any desired dilution can be obtained by dilution with water. Using such dilutions, living plants as well as plant propagation material can be treated by spraying, pouring or immersion.

### F10. Controlled Release Capsule Suspension

28 parts of a compound of formula I are mixed with 2 parts of an aromatic solvent and 7 parts of toluene diisocyanate/polymethylene-polyphenylisocyanate-mixture (8:1). This mixture is emulsified in a mixture of 1.2 parts of polyvinylalcohol, 0.05 parts of a defoamer and 51.6 parts of water until the desired particle size is achieved. To this emulsion a mixture of 2.8 parts 1,6-diaminohexane in 5.3 parts of water is added. The mixture is agitated until the polymerization reaction is completed. The obtained capsule suspension is stabilized by adding 0.25 parts of a thickener and 3 parts of a dispersing agent. The resulting formulation is applied to seeds as an aqueous suspension in an apparatus suitable for that purpose.

### Application to turfgrass

The compositions according to the present invention can be applied to the turfgrass or seed thereof by treating the turfgrass, the locus thereof, or seeds thereof, with a composition according to the invention. Within said embodiment of the invention, the compositions according to the invention are preferably applied to the turfgrass by spraying or spreading. Most preferably, the compositions are applied in form of granules.

It is therefore proposed in accordance with the present invention a method for controlling weeds in turfgrass, which comprises applying to the turfgrass, the locus thereof or seeds thereof a herbicidally effective amount of a compound of formula I 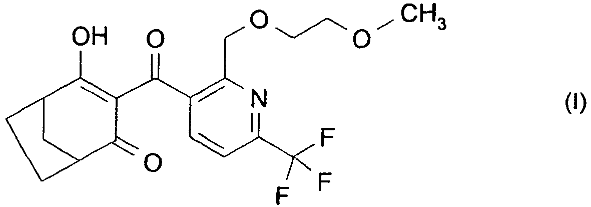 in the form of a granular composition. The compound of formula I can be added to the formulation mixture that is used to make the granules, such that it is dispersed throughout the granule. Alternatively, the compound of formula I can be impregnated into a granule, or coated on the surface of a granule. The granules may be inert, for example granules of pumice, attapulgite clay, fuller's earth, kieselguhr, diatomaceous earth or ground corn cob.

In one embodiment of the present invention, the granules may be fertilizer granules, or may comprise at least one fertilizer component.

In general nitrogen based fertilizers are routinely used in turfgrass management to feed grass and stimulate growth. These granule formulations provide better consistency and spectrum of weed control and generally cause less damage or injury to the turfgrass itself than liquid applications of the compound of formula I. Particularly effective compositions of the present invention are granule compositions having an average particle size of from about 0.5 mm to 2.5 mm, in particular of from 1 mm to 2 mm. These compositions are preferably applied as dry product.

The granular compositions of the present invention may be produced employing any of a variety of processes. For example, the compound of formula I may be adhered to the outer surface of the fertilizer/inert granule with an adhesive/sticking agent; incorporated into a mixture of dry ingredients and a liquid, and then extruded or molded into discrete particles; or impregnated into a porous granule. Further methods for producing granular compositions are for example disclosed in US 2007/0021305, in particular in example 1 on page 3.

The granular compositions of the present invention may also comprise one or more safeners as described below. In particular, the safener may be selected from the group consisting of cloquintocet-mexyl, cyprosulfamide, isoxadifen-ethyl, and a compound of formula 2.3

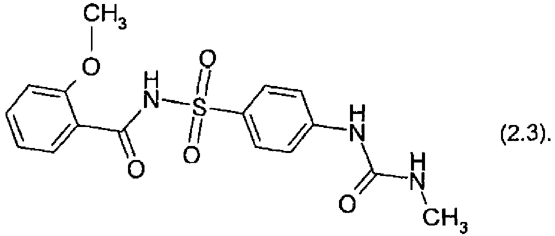

Suitably, the safener is cyprosulfamide or a compound of formula 2.3.

To maintain high quality, healthy turfgrass on the intended surface area of ground, such as for example, a golf course, a sports field, a park area or a home lawn, the compositions according to the invention can be applied to the turfgrass once or more than once during maintenance of the turfgrass.

Preferably, the compositions according to the invention are applied to the turfgrass once or more than once during a growing season of the turfgrass.

### Application to the locus of the turfgrass

The compositions according to the invention can be applied to the turfgrass by treating the locus of the turfgrass with a composition according to the invention. For example, the compositions according to the invention can be applied to the soil before or after the seeds of the turfgrass are sown or placed into the soil; alternatively the compositions according to the invention can be applied to a substrate for the growth of turfgrass before or after the seeds of the turfgrass are placed into the substrate; alternatively the compositions according to the invention can be applied to the soil before turfgrass grown on a substrate are placed on top of the soil together with the substrate.

### Application to the seeds of the turfgrass

The compositions according to the invention can be applied to the seeds of the turfgrass by treating the seeds with a composition according to the invention.

When the compositions according to the invention are used for treating seed, rates of 0.001 to 50 g of the compound of formula I per kg of seed, preferably from 0.01 to 10 g per kg of seed, are generally sufficient.

### Application to HPPD tolerant turfgrass

The compositions and methods of the present invention may be applied to HPPD tolerant turfgrass. Turfgrass species may be rendered tolerant towards HPPD-inhibiting herbicides by conventional methods of breeding using a native trait, or by generic engineering. Examples of crops that have been rendered tolerant to herbicides or classes of herbicides by genetic engineering methods include glyphosate- and glufosinate-resistant maize varieties commercially available under the trade names RoundupReady® and LibertyLink®. HPPD tolerance in turfgrass may be stacked alongside other desirable traits, for example, tolerance to other herbicides (such as glyphosate), or resistance to insect feeding (see for example WO2007/027828).

### Application in combination with other compounds

The compositions and methods of the present invention may be applied in combination with other compounds. The application of a mixture of more than one compound may be desirable as it can save the operator considerable time. For example the compositions may include one or more additional herbicides, insecticides, fungicides, or plant growth regulators. Co-herbicides could include other HPPD inhibitors, such as mesotrione, or herbicides having different modes of action, such as ACCase inhibitors or photosystem II inhibitors. The person skilled in the art is familiar with the need to ensure that the compounds are compatible for simultaneous application.

Such mixtures may be co-formulated into a single product, or be mixed together prior to application, for example in a spray tank. The mixtures may be applied simultaneously or sequentially.

### Application with safeners

According to the present invention, there is provided a method for controlling weeds in turfgrass, which comprises applying to the turfgrass, the locus thereof or seeds thereof a herbicidal composition comprising a herbicidally effective amount of a compound of formula I and an amount, effective for herbicide antagonism, of a safener. The use of a safener may be desirable to reduce phytotoxicity (for example in the form of bleaching or chlorosis) against desirable turfgrass species. In one embodiment of the present invention, the compound of formula I is applied in combination with a safener for controlling weeds in warm season turfgrass.

Any suitable herbicide safener may be used in combination with the compound of formula I. Details of known herbicide safeners can be found in the Pesticide Manual (British Crop Production Council, 14th edition), and these include, for example, benoxacor (Pesticide Manual entry 64), fenclorim (Pesticide Manual entry 344), cloquintocet-mexyl (Pesticide Manual entry 166), mefenpyr-diethyl (Pesticide Manual entry 524), furilazole (Pesticide Manual entry 425), dicyclonon (Pesticide Manual entry S1103), fluxofenim (Pesticide Manual entry 411), dichlormid (Pesticide Manual entry 236), flurazole (Pesticide Manual entry S1222), isoxadifen-ethyl (Pesticide Manual entry 494), fenchlorazole-ethyl (Pesticide Manual entry 343), primisulfuron-methyl (Pesticide Manual entry 678), cyprosulfamide, the compound of formula 2.1 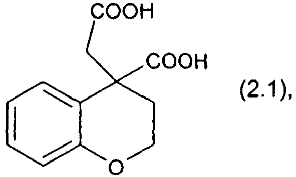 the compound of formula 2.2 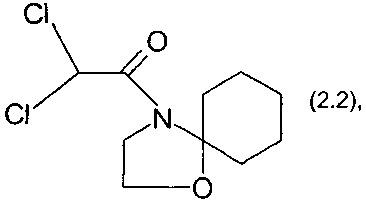 the compound of formula 2.3 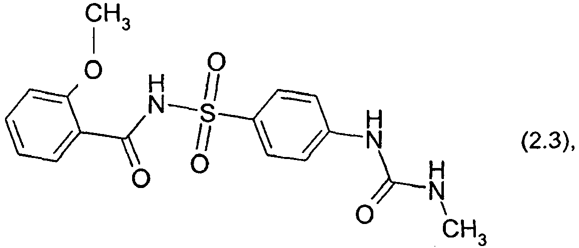 the compound of formula 2.4 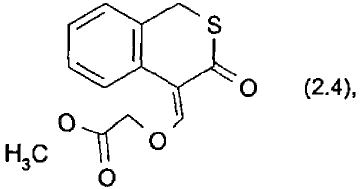 the compound of formula 2.5 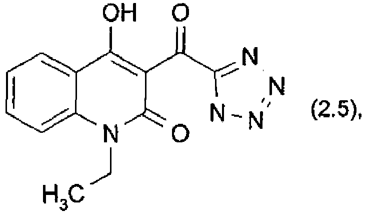 and the compound of formula 2.6

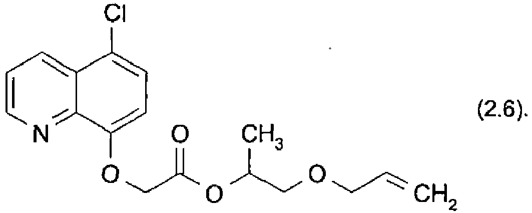

In one embodiment of the present invention, the safener is selected from the group consisting of cloquintocet-mexyl, isoxadifen-ethyl, cyprosulfamide, and a compound of formula 2.3. In a further embodiment of the present invention, the safener is cyprosulfamide. In a still further embodiment of the present invention, the safener is the compound of formula 2.3.

The method of the present invention may also use a selectively herbicidal composition that comprises as active ingredient a mixture of a herbicidally effective amount of the compound of formula I and an amount, effective for herbicide antagonism, of cyprosulfamide. Useful plants in which the composition according to the invention can be used include crops such as cereals, for example barley and wheat, cotton, oilseed rape, maize, rice, soybeans, sugar beet and sugar cane, as well as turfgrass. Crop plants can also include trees, such as fruit trees, palm trees, coconut trees or other nuts, vines such as grapes, fruit bushes, fruit plants and vegetables. Crops are to be understood as also including those crops which have been rendered tolerant to herbicides or classes of herbicides (e.g. ALS-, GS-, EPSPS-, PPO-, ACCase and HPPD-inhibitors) by conventional methods of breeding or by genetic engineering. An example of a crop that has been rendered tolerant to imidazolinones, e.g. imazamox, by conventional methods of breeding is Clearfield® summer rape (canola). Examples of crops that have been rendered tolerant to herbicides by genetic engineering methods include e.g. glyphosate- and glufosinate-resistant maize varieties commercially available under the trade names RoundupReady® and LibertyLink®.

Depending on the intended use, a safener can be used for pretreating the seed material of the crop plant (dressing the seed or cuttings) or introduced into the soil before or after sowing. It can, however, also be applied alone or together with the herbicide after emergence of the plants. The treatment of the plants or the seed material with the safener can therefore take place in principle independently of the time of application of the herbicide. The treatment of the plant may, however, be carried out also by simultaneous application of herbicide and safener (e.g. in the form of a tank mixture). The rate of application of safener relative to herbicide is largely dependent on the mode of application. In the case of a field treatment, which is carried out either using a tank mixture comprising a combination of safener and herbicide or by separate application of safener and herbicide, the ratio of herbicides to safener is generally from 100:1 1 to 1:10, preferably from 20:1 to 1:1. As a rule, from 0.001 to 1.0 kg of safener/ha, preferably from 0.001 to 0.25 kg of safener/ha, is applied in the case of field treatment.

### BIOLOGICAL EXAMPLES

### Example B1: Selective post-emergence herbicidal action of the compound of formula I

The selectivity of the compound of formula I in turf (removal of grassy and broadleaf weeds) has been tested in turfgrass varieties selected from Kentucky bluegrass, tall fescue and perennial ryegrass and in grassy weeds selected from clover (an aggressive perennial weed) and dandelion (a weed of perennial horticultural crops and gardens which may also be a problem in some annual crops, particularly where reduced tillage is practiced).

The trials were conducted in Champaign, IL, U.S. (Table B1.1) and Hudson, NY, U.S. (Table B1.2) under field conditions. Turfgrasses were maintained at approximately a 2.5" height, like a home lawn. Mixed turf and weed stands were present. The test compounds were applied with a CO₂ pressurized backpack sprayer by spraying in the form of an aqueous suspension (prepared from a wettable powder) in a concentration of 210 to 280 g/ha. The plots were then mowed and irrigated as needed. After 22 and 28 days respectively, the test is visually evaluated (100 % = total damage to plant; 0 % = no damage to plant). The results are given in Table B1.1 and B1.2.

**Table B1.1: post-emergence herbicidal action of the compound of formula I on clover weed (22 days after application):**

| Plant/application rate | % damage at 210 g/ha | % damage at 280 g/ha |
|---|---|---|
| Clover | 88 | 92 |
| Kentucky blue grass | 0 | 0 |
| Tall fescue | 0 | 0 |
| Perennial ryegrass | 0 | 0 |

**Table B1.2: post-emergence herbicidal action of the compound of formula I on dandelion weed (28 days after application):**

| Plant/application rate | % damage at 210 g/ha | % damage at 280 g/ha |
|---|---|---|
| Dandelion | 82.5 | 90 |
| Tall fescue | 0 | 0 |

From the above results can be derived that the compound of formula I is suitable to combat undesired broadleaf weeds like clover and dandelion in turfgrass varieties in particular in Kentucky bluegrass, tall fescue and perennial ryegrass at the tested application rates.

### Example B2: Testing of phytotoxicity of compound of formula I via spray application

The phytotoxicity of the compound of formula I to turfgrass species was tested. The compound was applied via post emergence spray to a range of warm and cool season turfgrass species at various rates and spray treatment treatment regimes. Percentage phytotoxicity assessments were taken at various timepoints. The results are presented in Tables B2.1 to B2.8.

**Table B2.1: St. Augustinegrass**

| **Treatment** | **# appl's*** | **Rate (g ai/ha)** | **8 DAT** | **14 DAT** | **29 DAT** | **35 DAT** | **43 DAT** | **51 DAT** |
|---|---|---|---|---|---|---|---|---|
| None (control) | 0 | - | 0.00 | 0.00 | 0.00 | 0.00 | 0.00 | 0.00 |
| Formula I | 1 | 140 | 36.67 | 28.33 | 0.00 | 0.00 | 0.00 | 0.00 |
| Formula I | 1 | 280 | 40.00 | 43.33 | 0.00 | 0.00 | 0.00 | 0.00 |
| Formula I | 2 | 140 | 43.33 | 40.00 | 0.00 | 28.33 | 8.33 | 1.67 |
| Formula I | 2 | 280 | 41.67 | 51.67 | 0.00 | 30.00 | 11.67 | 5.00 |

| | | | | | | | | |
|---|---|---|---|---|---|---|---|---|
| * # appl's = number of applications of the treatment. | | | | | | | | |

**Table B2.2: Zoysiagrass v. Meyer**

| **Treatment** | **# appl's** | **Rate (g ai/ha)** | **8 DAT** | **14 DAT** | **29 DAT** | **35 DAT** | **43 DAT** | **51 DAT** | **60 DAT** |
|---|---|---|---|---|---|---|---|---|---|
| None (control) | 0 | - | 0.00 | 0.00 | 0.00 | 0.00 | 0.00 | 0.00 | 0.00 |
| Formula I | 1 | 140 | 42.50 | 51.25 | 41.25 | 25.00 | 7.50 | 5.00 | 0.00 |
| Formula I | 1 | 280 | 45.00 | 57.50 | 61.25 | 28.75 | 8.75 | 3.75 | 0.00 |
| Formula I | 2 | 140 | 33.75 | 47.50 | 17.50 | 43.75 | 27.50 | 8.75 | 0.00 |
| Formula I | 2 | 280 | 38.75 | 57.50 | 52.50 | 47.50 | 28.75 | 12.50 | 0.00 |

**Table B2.3: Bermudagrass v. Tifway 419**

| **Treatment** | **# appl's** | **Rate (g ai/ha)** | **8 DAT** | **14 DAT** | **29 DAT** | **35 DAT** | **43 DAT** | **51 DAT** | **60 DAT** |
|---|---|---|---|---|---|---|---|---|---|
| None (control) | 0 | - | 0.00 | 0.00 | 0.00 | 0.00 | 0.00 | 0.00 | 0.00 |
| Formula I | 1 | 140 | 36.25 | 28.75 | 1.25 | 0.00 | 0.00 | 0.00 | 0.00 |
| Formula I | 1 | 280 | 35.00 | 52.50 | 1.25 | 0.00 | 0.00 | 0.00 | 0.00 |
| Formula I | 2 | 140 | 26.25 | 31.25 | 0.00 | 30.00 | 18.75 | 7.50 | 0.00 |
| Formula I | 2 | 280 | 36.25 | 52.50 | 3.75 | 28.75 | 22.50 | 8.75 | 0.00 |

**Table B2.4: Perennial ryegrass / fine fescue mix**

| **Treatment** | **# appl's** | **Rate (g ai/ha)** | **6 DAT** | **14 DAT** | **21 DAT** | **28 DAT** | **34 DAT** | **39 DAT** | **49 DAT** |
|---|---|---|---|---|---|---|---|---|---|
| None (control) | 0 | - | 0.00 | 0.00 | 0.00 | 0.00 | 0.00 | 0.00 | 2.50 |
| Formula I | 1 | 140 | 4.00 | 18.75 | 6.75 | 2.50 | 0.50 | 0.00 | 3.75 |
| Formula I | 1 | 280 | 4.50 | 25.00 | 6.25 | 1.75 | 1.25 | 0.00 | 0.00 |
| Formula I | 2 | 140 | 3.00 | 20.00 | 6.75 | 2.75 | 10.50 | 8.75 | 4.25 |
| Formula I | 2 | 280 | 3.50 | 28.75 | 11.00 | 17.50 | 22.50 | 23.75 | 10.00 |

**Table B2.5: Bermudagrass**

| **Treatment** | **# appl's** | **Rate (g ai/ha)** | **7 DAT** | **14 DAT** | **21 DAT** | **32 DAT** | **35 DAT** | **42 DAT** | **49 DAT** |
|---|---|---|---|---|---|---|---|---|---|
| None (control) | O | - | 0.00 | 0.00 | 1.25 | 0.00 | 0.00 | 5.00 | 0.00 |
| Formula I | 1 | 140 | 38.75 | 18.75 | 15.00 | 13.75 | 13.75 | 7.50 | 6.25 |
| Formula I | 1 | 280 | 38.75 | 28.75 | 12.50 | 15.00 | 15.00 | 8.75 | 6.25 |
| Formula I | 2 | 140 | 30.00 | 26.25 | 15.00 | 68.75 | 35.00 | 15.00 | 28.75 |
| Formula I | 2 | 280 | 42.50 | 36.25 | 18.75 | 75.00 | 65.00 | 26.25 | 30.00 |

**Table B2.6: Kentucky bluegrass (3D blend)**

| **Treatment** | **# appl's** | **Rate (g ai/ha)** | **4 DAT** | **12 DAT** | **22 DAT** | **33 DAT** | **42 DAT** | **160 DAT** |
|---|---|---|---|---|---|---|---|---|
| None (control) | 0 | | 2.50 | 0.00 | 0.00 | 0.00 | 0.00 | 0.00 |
| Formula I | 1 | 10 | 7.50 | 0.00 | 0.00 | 0.00 | 0.00 | 0.00 |
| Formula I | 1 | 20 | 2.50 | 0.00 | 0.00 | 0.00 | 0.00 | 0.00 |
| Formula I | 1 | 40 | 7.50 | 0.00 | 0.00 | 0.00 | 0.00 | 0.00 |
| Formula I | 1 | 80 | 7.50 | 0.00 | 0.00 | 0.00 | 0.00 | 0.00 |
| Formula I | 1 | 160 | 7.50 | 0.00 | 0.00 | 0.00 | 0.00 | 0.00 |

**Table B2.7: Bluegrass / fescue mix**

| **Treatment** | **# appl's** | **Rate (g ai/ha)** | **7 DAT** | **14 DAT** | **22 DAT** | **29 DAT** | **46 DAT** |
|---|---|---|---|---|---|---|---|
| None (control) | 0 | - | 0.00 | 0.00 | 0.00 | 0.00 | 0.00 |
| Formula I | 1 | 10 | 0.00 | 0.00 | 0.00 | 0.00 | 0.00 |
| Formula I | 1 | 20 | 0.00 | 0.00 | 0.00 | 0.00 | 0.00 |
| Formula I | 1 | 40 | 0.00 | 0.00 | 0.00 | 0.00 | 0.00 |
| Formula I | 1 | 80 | 0.00 | 0.00 | 0.00 | 0.00 | 0.00 |
| Formula I | 1 | 160 | 0.00 | 2.50 | 0.00 | 0.00 | 0.00 |

**Table B2.8: St. Augustinegrass v. Delmar**

| **Treatment** | **# appl's** | **Rate (g ai/ha)** | **5 DAT** | **12 DAT** | **18 DAT** | **28 DAT** |
|---|---|---|---|---|---|---|
| None (control) | 0 | - | 0.00 | 0.00 | 0.00 | 0.00 |
| Formula I | 1 | 10 | 5.00 | 5.00 | 0.00 | 0.00 |
| Formula I | 1 | 20 | 6.67 | 6.67 | 2.00 | 0.00 |
| Formula I | 1 | 40 | 11.67 | 18.33 | 4.00 | 0.00 |
| Formula I | 1 | 80 | 16.67 | 30.00 | 5.00 | 0.67 |
| Formula I | 1 | 160 | 23.33 | 46.67 | 8.33 | 3.00 |

The results show that levels of phytotoxicity to turfgrass are acceptable when formula I is applied at low rates. Phytotoxicity is also lower on cool season turfgrass species.

### Example B3: Testing of phytotoxicity of compound of formula I via granule application

The phytotoxicity of the compound of formula I to turfgrass species was tested. The compound was applied by distribution of granule formulations of formula I, post emergence, to turfgrass species at two rates. All treatments were watered-in 1 day after application. Percentage phytotoxicity assessments were taken at various timepoints. The results are presented in Tables B3.1 to B3.4.

Two granule formulations were made and tested. Granule A is an inert granule formulation, comprising 99.06 wt% DG Lite 150 granules, 0.14 wt% compound of formula I, 0.50 wt% Sunspray 6N, and 0.30 wt% HiSil 233. The compound of formula I was added to the DG Lite granules while blending in a Continental Rollo-mixer. Sunspray 6N oil was then sprayed onto the granules, and HiSil added to dry excess liquid and improve granule flowability. The granules were blended in the mixer for 20-30 minutes until homogeneous, and passed through a -12/+60 mesh to remove over and under sized particles.

Granule B is a fertiliser granule formulation, comprising 54.65 wt% urea, 6.63 wt% triple super phosphate, 4.95 wt% potassion chloride, 9.91 wt% huber clay, 7.22 wt% HiSil 233, 0.16 wt% compound of formula I, 14.41 wt% agnique ME 181, 2.07 wt% stepfac 8180, and 11.98 wt% water. The dry urea fertilizer, triple super phosphate, and potassium chloride were separately reduced to fine powders in a dry mill, and then mixed together with Huber clay, some of the HiSil, and the compound of formula I. In a separate container, Stepfac 8180 and Agnique ME 181 were mixed until uniform, added to the dry components and water added to begin granulation. The remaining HiSil was added and granules dried at 40-60°C, to remove excess liquid. Finally, the granules were passed through a -12/+60 mesh to remove over and under sized particles.

**Table B3.1: St. Augustinegrass v. Delmar**

| **Treatment** | **Formulation** | **Rate (g ai/ha)** | **7 DAT** | **11 DAT** | **15 DAT** | **20 DAT** | **28 DAT** |
|---|---|---|---|---|---|---|---|
| None (control) | - | - | 0.00 | 0.00 | 0.00 | 0.00 | 0.00 |
| Formula I | Granule A | 112 | 8.30 | 1.30 | 0.70 | 0.00 | 0.00 |
| Formula I | Granule A | 280 | 20.00 | 5.70 | 3.30 | 0.00 | 0.00 |
| Formula I | Granule B | 112 | 23.30 | 10.00 | 5.00 | 1.30 | 0.00 |
| Formula I | Granule B | 280 | 36.70 | 20.00 | 11.70 | 5.00 | 1.70 |
| Formula I | Spray | 112 | 36.70 | 20.00 | 9.30 | 4.00 | 0.00 |
| Formula I | Spray | 280 | 60.00 | 43.30 | 20.00 | 10.00 | 3.30 |

**Table B3.2: Bermudagrass v. Tifway 419**

| **Treatment** | **Formulation** | **Rate (g ai/ha)** | **7 DAT** | **11 DAT** | **15 DAT** | **20 DAT** | **28 DAT** |
|---|---|---|---|---|---|---|---|
| None (control) | - | - | 0.00 | 0.00 | 0.00 | 0.00 | 0.00 |
| Formula I | Granule A | 112 | 6.00 | 0.00 | 0.00 | 0.00 | 0.00 |
| Formula I | Granule A | 280 | 23.30 | 8.30 | 2.30 | 0.00 | 0.00 |
| Formula I | Granule B | 112 | 16.70 | 4.00 | 0.00 | 0.00 | 0.00 |
| Formula I | Granule B | 280 | 33.30 | 15.00 | 3.30 | 1.30 | 0.00 |
| Formula I | Spray | 112 | 30.00 | 18.30 | 10.00 | 3.00 | 0.00 |
| Formula I | Spray | 280 | 66.70 | 25.00 | 10.00 | 6.00 | 0.00 |

In Tables B3.3 and B3.4, the granular formulations tested were made by spraying the compound of formula I onto various inert granules. In each of these trials, the granule formulations were tested at a higher rate than the corresponding spray application

**Table B3.3: Tall fescue v. Coronado**

| **Treatment** | **Formulation** | **Rate (g ai/ha)** | **8 DAT** |
|---|---|---|---|
| None (control) | - | - | 8.8 |
| Formula I | Bio Dac granule | 680 | 13.8 |
| Formula I | DG Lite granule | 680 | 20.0 |
| Formula I | Eco Gran granule | 680 | 20.0 |
| Formula I | Agsorb LUM MS granule | 680 | 9.3 |
| Formula I | Agsorb RUM GA granule | 680 | 18.8 |
| Formula I | Agsorb LUM GA granule | 680 | 23.8 |
| Formula I | Oil dry granule | 680 | 12.5 |
| Formula I | Non dispersing extruded granules | 680 | 21.3 |
| Formula I | Spray | 340 | 18.8 |

**Table B3.4: Perennial ryegrass v. blend of Bright Star, Citation Fore and Quick Trans**

| **Treatment** | **Formulation** | **Rate (g ai/ha)** | **8 DAT** |
|---|---|---|---|
| None (control) | - | - | 0.0 |
| Formula I | Bio Dac granule | 520 | 13.3 |
| Formula I | DG Lite granule | 520 | 18.8 |
| Formula I | Eco Gran granule | 520 | 18.8 |
| Formula I | Agsorb LUM MS granule | 520 | 5.8 |
| Formula I | Agsorb RUM GA granule | 520 | 18.8 |
| Formula I | Agsorb LUM GA granule | 520 | 20.0 |
| Formula I | Oil dry | 520 | 6.3 |
| Formula I | Non dispersing extruded granules | 520 | 18.8 |
| Formula I | Spray | 260 | 31.3 |

The results show that granular formulations of formula I cause less phytotoxicity to turfgrass than spray formulations.

### Example B4: Testing of phytotoxicity of compound of formula I applied in combination with safeners

The phytotoxicity to turfgrass of the compound of formula I in combination with various safeners was tested. The combinations were applied by post emergence spray application. Percentage phytotoxicity assessments were taken at various timepoints. The safeners tested in these trials were cloquintocet-mexyl, cyprosulfamide, a compound of formula 2.3, and isoxadifen-ethyl. The results are presented in Tables B4.1 to 84.3.

**Table B4.1: Zoysiagrass v. Empire**

| **Treatment** | **Safener (56 g ai/ha)** | **Al Rate (g ai/ha)** | **6 DAT** | **12 DAT** | **19 DAT** | **27 DAT** | **35 DAT** |
|---|---|---|---|---|---|---|---|
| None (control) | - | - | 0.00 | 0.00 | 0.00 | 0.00 | 0.00 |
| Formula I | None | 100 | 11.70 | 63.30 | 68.30 | 51.70 | 40.00 |
| Formula I | Cloquintocet-mexyl | 100 | 18.30 | 65.00 | 68.30 | 50.00 | 36.70 |
| Formula I | Cyprosulfamide | 100 | 15.00 | 65.00 | 68.30 | 45.00 | 36.70 |
| Formula I | Formula 2.3 | 100 | 18.30 | 40.00 | 35.00 | 21.70 | 20.00 |
| Formula I | Isoxadifen-ethyl | 100 | 21.70 | 65.00 | 66.70 | 43.30 | 33.30 |

**Table B4.2: St. Augustinegrass v. Floratam**

| **Treatment** | **Safener (50 gai/ha)** | **Al Rate (g ai/ha)** | **9 DAT** | **13 DAT** | **19 DAT** | **25 DAT** |
|---|---|---|---|---|---|---|
| None (control) | - | - | 0.00 | 0.00 | 0.00 | 0.00 |
| Formula I | None | 100 | 46.70 | 50.00 | 11.70 | 5.00 |
| Formula I | Cyprosulfamide | 100 | 38.30 | 38.30 | 7.70 | 3.00 |
| Formula I | Formula 2.3 | 100 | 23.30 | 23.30 | 2.30 | 0.00 |
| Formula I | Isoxadifen-ethyl | 100 | 45.00 | 46.70 | 9.30 | 3.00 |

**Table B4.3: Bermudagrass v. Tifway 419**

| **Treatment** | **Safener (56 g ai/ha)** | **Al Rate (g ai/ha)** | **7 DAT** | **11 DAT** | **18 DAT** |
|---|---|---|---|---|---|
| None (control) | - | - | 0.00 | 0.00 | 0.00 |
| Formula I | None | 100 | 56.70 | 38.30 | 9.30 |
| Formula I | Cloquintocetmexyl | 100 | 43.30 | 30.00 | 8.30 |
| Formula I | Cyprosulfamide | 100 | 33.30 | 25.00 | 7.30 |
| Formua I | Formula 2.3 | 100 | 30.00 | 25.00 | 2.00 |
| Formula I | Isoxadifen-ethyl | 100 | 51.70 | 33.30 | 6.00 |

The results show that the application of Formula I in combination with a safener reduces the level of phytotoxicity to turfgrass, and that cyprosulfamide and Formula 2.3 are particular effective safeners.

Tables B4.4 and B4.5 present the results of trials using safeners applied in combination with granule formulations of the compound of formula I.

**Table B4.4: Tall fescue v. Coronado**

| **Treatment** | **Formulation** | **Safener (0.07%)** | **Al Rate (g ai/ha)** | **8 DAT** |
|---|---|---|---|---|
| None (control) | - | - | - | 8.8 |
| Formula I | DG Lite granule | None | 680 | 20.0 |
| Formula I | DG Lite granule | Formula 2.3 | 680 | 16.3 |
| Formula I | DG Lite granule | Cyprosulfamide | 680 | 22.5 |
| Formula I | DG Lite granule | Isoxadifen | 680 | 21.3 |
| Formula I | Spray | None | 340 | 18.8 |

**Table B4.5: Perennial ryegrass v. blend of Bright Star, Citation Fore and Quick Trans**

| **Treatment** | **Formulation** | **Safener (0.07%)** | **Al Rate (g ai/ha)** | **8 DAT** |
|---|---|---|---|---|
| None (control) | - | - | - | 0.0 |
| Formula I | DG Lite granule | None | 520 | 18.8 |
| Formula I | DG Lite granule | Formula 2.3 | 520 | 20.0 |
| Formula I | DG Lite granule | Cyprosulfamide | 520 | 21.3 |
| Formula I | DG Lite granule | Isoxadifen | 520 | 21.3 |
| Formula I | Spray | None | 260 | 31.3 |

### Example B5: Testing of efficacy of compound of formula I against weeds in turfgrass via spray application

The weed control efficacy of the compound of formula I was tested. The compound was applied via post emergence spray to a range of weeds, at various rates and spray treatment treatment regimes. Percentage weed control assessments were taken at various timepoints. The results are presented in Tables B5.1 to B5.7.

**Table B5.1: % control of Paspalum sp. in common centipedegrass**

| **Treatment** | **# appl's** | **Rate (g ai/ha)** | **5 DAT** | **13 DAT** | **21 DAT** | **27 DAT** | **35 DAT** | **42 DAT** | **61 DAT** |
|---|---|---|---|---|---|---|---|---|---|
| None (control) | 0 | - | 0.00 | 0.00 | 0.00 | 0.00 | 0.00 | 0.00 | 0.00 |
| Formua I | 1 | 140 | 16.67 | 60.00 | 55.00 | 46.67 | 21.67 | 6.67 | 13.33 |
| Formua I | 1 | 280 | 21.67 | 71.67 | 70.00 | 60.00 | 43.33 | 20.00 | 18.33 |
| Formua I | 2 | 140 | 20.00 | 61.67 | 61.67 | 56.67 | 83.33 | 81.67 | 70.00 |
| Formua I | 2 | 280 | 20.00 | 68.33 | 68.33 | 58.33 | 91.67 | 95.00 | 81.67 |

**Table B5.2: % control of Richardia scabra (Florida Pusley) in common centipedegrass**

| **Treatment** | **# appl's** | **Rate (g ai/ha)** | **5 DAT** | **13 DAT** | **21 DAT** | **27 DAT** | **35 DAT** | **42 DAT** | **61 DAT** |
|---|---|---|---|---|---|---|---|---|---|
| None (control) | 0 | - | 0.00 | 0.00 | 0.00 | 0.00 | 0.00 | 0.00 | 0.00 |
| Formua I | 1 | 140 | 16.67 | 25.00 | 33.33 | 33.33 | 23.33 | 16.67 | 13.33 |
| Formua I | 1 | 280 | 20.00 | 36.67 | 46.67 | 41.67 | 38.33 | 28.33 | 38.33 |
| Formua I | 2 | 140 | 16.67 | 20.00 | 41.67 | 33.33 | 60.00 | 53.33 | 8.33 |
| Formua I | 2 | 280 | 16.67 | 28.33 | 46.67 | 35.00 | 61.67 | 61.67 | 16.67 |

**Table B5.3: % control of Hydrocotyle sp. (dollarweed) in St. Augustinegrass v. Floratam**

| **Treatment** | **# appl's** | **Rate (g ai/ha)** | **5 DAT** | **13 DAT** | **21 DAT** |
|---|---|---|---|---|---|
| None (control) | 0 | - | 0.00 | 0.00 | 0.00 |
| Formua I | 1 | 140 | 10.00 | 60.00 | 50.00 |
| Formua I | 1 | 280 | 15.00 | 57.50 | 60.00 |
| Formua I | 2 | 140 | 15.00 | 55.00 | 52.50 |
| Formua I | 2 | 280 | 20.00 | 65.00 | 62.50 |

**Table B5.4: % control of Trifolium repens (white clover) in St. Augustinegrass v. Floratam**

| **Treatment** | **# appl's** | **Rate (g ai/ha)** | **5 DAT** | **13 DAT** | **21 DAT** | **27 DAT** | **35 DAT** | **42 DAT** | **61 DAT** |
|---|---|---|---|---|---|---|---|---|---|
| None (control) | 0 | - | 0.00 | 0.00 | 0.00 | 0.00 | 0.00 | 0.00 | 0.00 |
| Formua I | 1 | 140 | 21.67 | 86.67 | 85.00 | 88.33 | 78.33 | 76.67 | 76.67 |
| Formua I | 1 | 280 | 25.00 | 91.67 | 90.00 | 93.33 | 91.67 | 90.00 | 90.00 |
| Formua I | 2 | 140 | 25.00 | 88.33 | 86.67 | 91.67 | 96.00 | 96.67 | 100.00 |
| Formua I | 2 | 280 | 26.67 | 95.00 | 93.33 | 95.00 | 99.33 | 100.0 0 | 100.00 |

**Table B5.5: % control of Taraxacum officinale (dandelion) in perennial ryegrass / fine fescue mix**

| **Treatment** | **# appl's** | **Rate (g ai/ha)** | **14 DAT** | **21 DAT** |
|---|---|---|---|---|
| None (control) | 0 | - | 0.00 | 0.00 |
| Formua I | 1 | 140 | 32.50 | 87.50 |
| Formua I | 1 | 280 | 37.50 | 90.00 |
| Formua I | 2 | 140 | 47.50 | 87.50 |
| Formua I | 2 | 280 | 41.25 | 90.00 |

**Table B5.6: % control of Trifolium repens (clover) in bluegrass / fescue mix**

| **Treatment** | **Rate (g ai/ha)** | **7 DAT** | **14 DAT** | **22 DAT** | **29 DAT** | **46 DAT** |
|---|---|---|---|---|---|---|
| None (control) | - | 0.00 | 0.00 | 0.00 | 0.00 | 0.00 |
| Formula I | 10 | 0.00 | 21.25 | 23.75 | 8.75 | 10.00 |
| Formula I | 20 | 0.00 | 22.50 | 28.75 | 22.50 | 28.75 |
| Formula I | 40 | 11.25 | 21.25 | 22.50 | 35.00 | 47.50 |
| Formula I | 80 | 17.50 | 22.50 | 30.00 | 52.50 | 81.25 |
| Formula I | 160 | 22.50 | 27.50 | 41.25 | 76.25 | 91.25 |

**Table B5.7: % control of Digitaria ischaemum (smooth crabgrass) in bluegrass / fescue mix**

| **Treatment** | **Rate (g ai/ha)** | **7 DAT** | **14 DAT** | **22 DAT** | **29 DAT** | **46 DAT** |
|---|---|---|---|---|---|---|
| None (control) | - | 0.00 | 0.00 | 0.00 | 0.00 | 0.00 |
| Formula I | 10 | 0.00 | 0.00 | 0.00 | 0.00 | 1.25 |
| Formula I | 20 | 0.00 | 2.50 | 5.00 | 3.75 | 7.50 |
| Formula I | 40 | 0.00 | 0.00 | 2.50 | 8.75 | 30.00 |
| Formula I | 80 | 0.00 | 0.00 | 5.00 | 17.50 | 51.25 |
| Formula I | 160 | 0.00 | 6.25 | 8.75 | 20.00 | 70.00 |

The results show that the compound of Formula I is effective at controlling a variety of turfgrass weeds, even when applied at low rates.

### Example B6: Testing of weed control of granule formulations of compound of formula I

The weed control efficacy of the compound of formula I was tested. The compound was applied by distribution of granule formulations of formula I (see example B3), post-crop and post-weed emergence at two rates. All treatments were watered-in 1 day after application. Percentage weed control assessments were taken at various timepoints. The results are presented in Table B6.1.

**Table B6.1: % control of Trifolium repens (white clover) in St. Augustinegrass v. Delmar**

| **Treatment** | **Formulation** | **Rate (g ai/ha)** | **7 DAT** | **11 DAT** | **15 DAT** | **20 DAT** | **28 DAT** |
|---|---|---|---|---|---|---|---|
| None (control) | - | - | 0.00 | 0.00 | 0.00 | 0.00 | 0.00 |
| Formula I | Granule A | 112 | 46.70 | 63.30 | 66.70 | 63.30 | 50.00 |
| Formula I | Granule A | 280 | 56.70 | 76.70 | 78.30 | 70.00 | 51.70 |
| Formula I | Granule B | 112 | 53.30 | 70.00 | 76.70 | 75.00 | 70.00 |
| Formula I | Granule B | 280 | 66.70 | 80.00 | 85.00 | 88.30 | 81.70 |
| Formula I | Spray | 112 | 63.30 | 78.30 | 81.70 | 76.70 | 76.70 |
| Formula I | Spray | 280 | 71.70 | 86.70 | 90.00 | 91.70 | 76.70 |

The results show that granule formulations of Formula I are almost as effective at weed control at spray formulations.

### Example B7: Testing of weed control of compound of formula I applied in combination with safeners

The weed control efficacy of the compound of formula I in combination with various safeners was tested. The combinations were applied by post emergence spray application. Percentage weed contol assessments were taken at various timepoints. The results are presented in Table B7.1.

**Table B7.1: % control of Hydrocotyle sp. (dollarweed) in St. Augustinegrass v. Delmar**

| **Treatment** | **Safener (56 g ai/ha)** | **Al Rate (g ai/ha)** | **7 DAT** | **11 DAT** | **18 DAT** |
|---|---|---|---|---|---|
| None (control) | - | - | 0.00 | 0.00 | 0.00 |
| Formula I | - | 100 | 41.70 | 61.70 | 61.70 |
| Formula I | Cloquintocet-mexyl | 100 | 41.70 | 63.30 | 53.30 |
| Formula I | Cyprosulfamide | 100 | 43.30 | 61.70 | 53.30 |
| Formula I | Formula 2.3 | 100 | 40.00 | 56.70 | 53.30 |
| Formula I | Isoxadifen-ethyl | 100 | 41.70 | 58.30 | 55.00 |

The results show that the presence of a safener does not significantly effect the herbicidal efficacy of Formula I.

## Claims

1. A method for controlling weeds in turfgrass, which comprises applying to the turfgrass, the locus thereof or seeds thereof a herbicidally effective amount of a compound of formula I 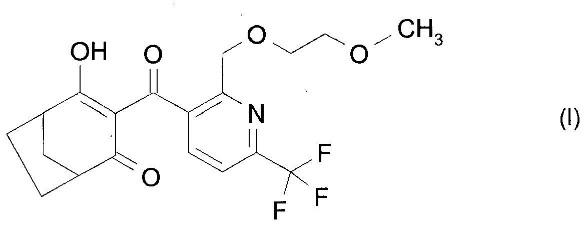 or a composition which contains said compound.

2. A method according to claim 1, wherein the compound or composition is in the form of a granule.

3. A method according to claim 2, wherein the granule is an inert or fertilizer granule.

4. A method according to claim 1, wherein the composition further comprises a safener in an amount effective for herbicide antagonism.

5. A method according to claim 4, wherein the safener is selected from the group consisting of cloquintocet-mexyl, cyprosulfamide, isoxadifen-ethyl, and a compound of formula 2.3

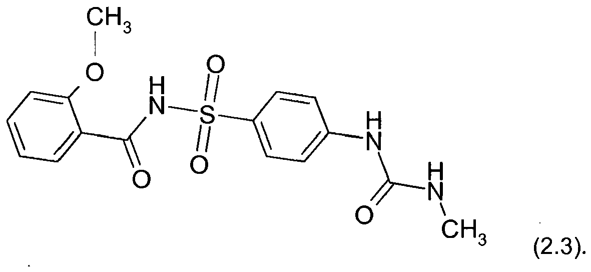

6. A method according to claim 5, wherein the safener is cyprosulfamide.

7. A method according to claim 5, wherein the safener is a compound of formula 2.3

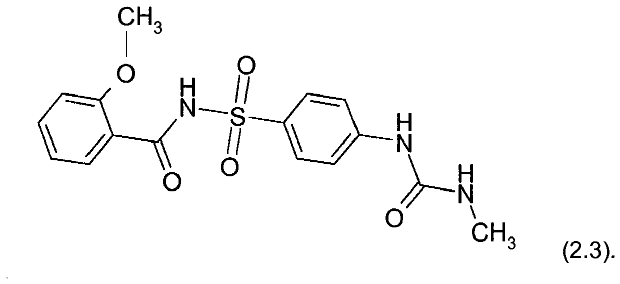

8. A method according to any one of claims 4 to 7, wherein the ratio of herbicide to safener is from 20:1 to 1:1.

9. A method according to any one of claims 4 to 7, wherein the turfgrass is a warm season turfgrass variety.

## Patentansprüche

1. Verfahren zur Bekämpfung von Unkraut in Rasengras, bei dem man auf das Rasengras, dessen Ort oder dessen Samen eine herbizidwirksame Menge einer Verbindung der Formel I 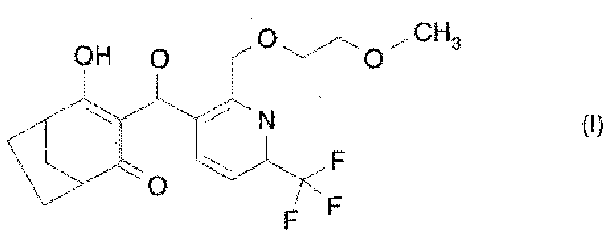 oder einer Zusammensetzung, die diese Verbindung enthält, ausbringt.

2. Verfahren nach Anspruch 1, wobei die Verbindung oder die Zusammensetzung in Form eines Granulatkorns vorliegt.

3. Verfahren nach Anspruch 2, wobei es sich bei dem Granulatkorn um ein inertes Granulatkorn oder ein Düngergranulatkorn handelt.

4. Verfahren nach Anspruch 1, wobei die Zusammensetzung weiterhin einen Safener in einer herbizidantagonismuswirksamen Menge umfasst.

5. Verfahren nach Anspruch 4, wobei der Safener aus der Gruppe bestehend aus Cloquintocet-mexyl, Cyprosulfamid, Isoxadifen-ethyl und einer Verbindung der Formel 2.3 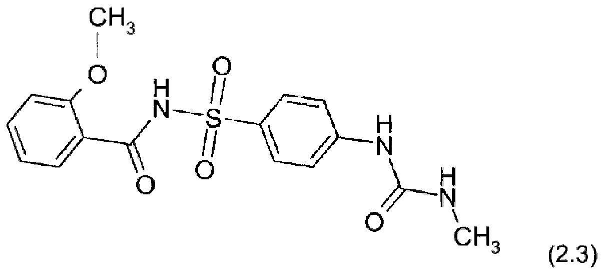 ausgewählt ist.

6. Verfahren nach Anspruch 5, wobei es sich bei dem Safener um Cyprosulfamid handelt.

7. Verfahren nach Anspruch 5, wobei es sich bei dem Safener um eine Verbindung der Formel 2.3 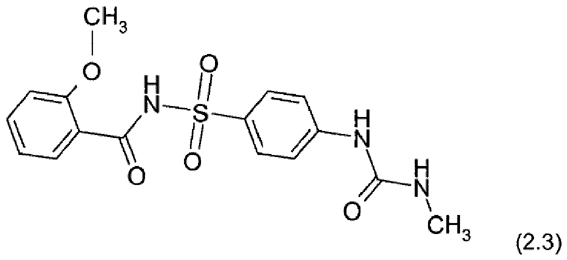 handelt.

8. Verfahren nach einem der Ansprüche 4 bis 7, wobei das Verhältnis von Herbizidsafener 20:1 bis 1:1 beträgt.

9. Verfahren nach einem der Ansprüche 4 bis 7, wobei es sich bei dem Rasengras um eine "Warm Season"-Rasengrassorte handelt.

## Revendications

1. Méthode de contrôle d'adventices dans du gazon, comprenant l'application au gazon, au lieu où celui-ci se développe ou aux semences de celui-ci, d'une quantité efficace sur le plan herbicide d'un composé de formule I 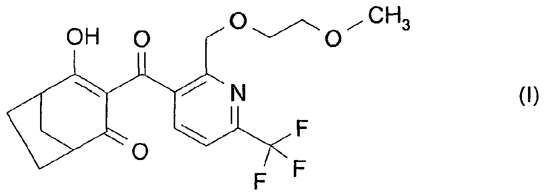 ou d'une composition qui contient ledit composé.

2. Méthode selon la revendication 1, dans laquelle le composé ou la composition se trouve sous la forme d'un granulé.

3. Méthode selon la revendication 2, dans laquelle le granulé est un granulé inerte ou de fertilisant.

4. Méthode selon la revendication 1, dans laquelle la composition comprend en outre un phytoprotecteur selon une quantité efficace pour un antagonisme herbicide.

5. Méthode selon la revendication 4, dans laquelle le phytoprotecteur est choisi dans le groupe constitué par le cloquintocet-méxyl, le cyprosulfamide, l'isoxadifen-éthyle, et un composé de formule 2.3

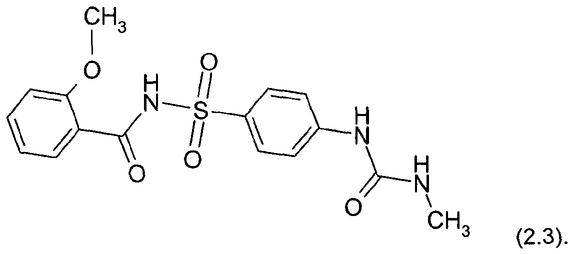

6. Méthode selon la revendication 5, dans laquelle le phytoprotecteur est le cyprosulfamide.

7. Méthode selon la revendication 5, dans laquelle le phytoprotecteur est un composé de formule 2.3

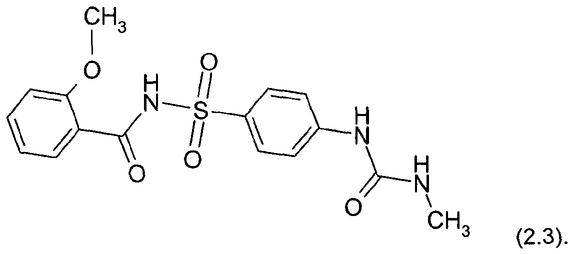

8. Méthode selon l'une quelconque des revendications 4 à 7, dans laquelle le rapport de l'herbicide au phytoprotecteur va de 20:1 à 1:1.

9. Méthode selon l'une quelconque des revendications 4 à 7, dans laquelle le gazon est une variété de gazon de saison chaude.
